# EUROPEAN PATENT SPECIFICATION

(11) **EP 4 262 284 B1**
(45) Date of publication and mention of the grant of the patent: **26.02.2025**
(21) Application number: 21936490.8
(22) Date of filing: 16.04.2021
(51) Int. Cl.: H04W 48/18, H04W 48/20, H04W 36/00

(54) **METHOD FOR ENTERING CONNECTED STATE, AND TERMINAL DEVICE**
VERFAHREN ZUM EINTRITT IN EINEN VERBUNDENEN ZUSTAND UND ENDGERÄTEVORRICHTUNG
PROCÉDÉ POUR ENTRER DANS UN ÉTAT CONNECTÉ, ET DISPOSITIF TERMINAL

(43) Date of publication of application: 18.10.2023
(73) Proprietor: GUANGDONG OPPO MOBILE TELECOMMUNICATIONS CORP., LTD., Dongguan, Guangdong 523860 (CN)
(72) Inventor: YANG, Haorui, Dongguan, Guangdong 523860 (CN); FU, Zhe, Dongguan, Guangdong 523860 (CN)
(74) Representative: Novagraaf Technologies
(86) International application number: PCT/CN2021/087927
(87) International publication number: WO 2022/217615

(56) References cited:
- EP-A1- 3 589 064
- CN-A- 110 402 600
- CN-A- 111 149 387
- CN-A- 111 149 387
- CN-A- 111 586 807
- US-A1- 2020 120 547
- US-A1- 2022 400 421
- VIVO: "Cell selection / reselection with network slicing", vol. RAN WG2, no. HangZhou, China; 20170515 - 20170519, 6 May 2017 (2017-05-06), XP051264473, Retrieved from the Internet <URL:http://www.3gpp.org/ftp/tsg_ran/WG2_RL2/TSGR2_98/Docs/> [retrieved on 20170506]
- LG ELECTRONICS: "Further discussion on how to decide intended slice for idle mobility", vol. RAN WG2, no. electronic; 20201102 - 20201113, 23 October 2020 (2020-10-23), XP052363259, Retrieved from the Internet <URL:https://ftp.3gpp.org/tsg_ran/WG2_RL2/TSGR2_112-e/Docs/R2-2010222.zip R2-2010222 Further discussion on how to decide intended slice for idle mobility.doc> [retrieved on 20201023]
- HUAWEI, HISILICON: "Slice based Cell (re)selection under network control", 3GPP DRAFT; R2-2101699, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. electronic; 20210125 - 20210205, 15 January 2021 (2021-01-15), Mobile Competence Centre ; 650, route des Lucioles ; F-06921 Sophia-Antipolis Cedex ; France , XP051974567

## Description

### TECHNICAL FIELD

The disclosure relates to the field of communications, and in particular to a method for entering a connected mode, a terminal device and a chip.

### BACKGROUND

A Network Slice usually refers to slicing a hardware infrastructure into multiple virtual end-to-end networks, each slice can have independent network resources, and all slices are logically isolated from each other. If one of the slices fails, the operations of the other slices will not be affected. Combined with the application scenario of the fifth generation mobile communication system (5G), operators can define different slices according to different service types, which can satisfy the different requirements of different users for delay, throughput, capacity, efficiency and the like, and bring better experience to users.

When the terminal device needs to use one or more network slices, the terminal device needs to request the use of the slices from network device first. After the network device agrees, the terminal device can establish a session and transmit data in the slices. However, there is a situation that when the terminal device has a new service demand and enters the connected mode, an accessed cell may not support the network slice required for the new service, which leads to the failure to successfully complete the new service, thereby reducing the user experience.

Document CN 111586807 (A) discloses a network access method and a communication device, and the method comprises the steps: obtaining, by terminal device, a first frequency point list after determining a first frequency point cell, wherein the first frequency point list comprises at least one frequency point, and it is determined by the terminal device that each frequency point contained in the first frequency point list does not support a slicing service requested by the terminal device; and if the first frequency point corresponding to the first frequency point cell is located in the first frequency point list, determining a second frequency point cell, wherein the second frequency point corresponding to the second frequency point cell is not located in the first frequency point list.

Document CN 111149387 (A) discloses a cell reselection method and device, and communication equipment. The cell reselection method, applied to a terminal, includes: receiving system messages, wherein the system messages include network slice information of network slices supported by neighboring cells; and performing cell reselection according to the network slice information.

### SUMMARY

In view of this, embodiments of the present disclosure provide a method for entering a connected mode, a terminal device and a chip mounted on the terminal device, which can optimize a mechanism for the terminal device to enter the connected mode. The invention is set out in the appended set of claims.

With the embodiments of the present disclosure, the terminal device does not directly enter the connected mode when the service transmission requirements occurs in an idle mode or an inactive mode, but the terminal device determines, based on the network slice information that needs to be used, whether to perform a cell reselection, so that a suitable cell can be selected before entering the connected mode. In this way, it can be ensured that the accessed cell supports the network slice required for a current service after the terminal device enters the connected mode, and the service interruption caused by the cell reselection can be avoided after the terminal device accesses the cell.

### BRIEF DESCRIPTION OF THE DRAWINGS

FIG. 1 is a schematic diagram of a system architecture of a 5G network according to an embodiment of the present disclosure.
FIG. 2 is an architectural schematic diagram of a network slice according to an embodiment of the present disclosure.
FIG. 3 is a flowchart of a method for entering a connected mode according to an embodiment of the present disclosure.
FIG. 4 and FIG. 5 are schematic diagrams of processes of a terminal device entering a connected mode in different embodiments of the present disclosure.
FIG. 6 is a schematic diagram of a principle of cell reselection according to the embodiment of the present disclosure.
FIG. 7 is a schematic structural block diagram of a terminal device according to an embodiment of the present disclosure.
FIG. 8 is a schematic block diagram of a communication device according to an embodiment of the present disclosure.
FIG. 9 is a schematic block diagram of a chip according to an embodiment of the present disclosure.
FIG. 10 is a schematic block diagram of a communication system according to an embodiment of the present disclosure.

### DETAILED DESCRIPTION

The technical solutions in the embodiments of the present disclosure will be described below with reference to the accompanying drawings in the embodiments of the present disclosure.

The technical solutions of the embodiments of the present disclosure can be applied to various communication systems, such as: New Radio (NR) system, an evolution system of the NR system, a NR-based access to unlicensed spectrum (NR-U) system, a Non-Terrestrial Networks (NTN) system, a Wireless Local Area Network (WLAN), a Wireless Fidelity (WiFi), a 5th-Generation (5G) system or other communication systems, and the like.

Generally speaking, traditional communication systems support a limited number of connections and are easy to implement. However, with the development of communication technology, mobile communication systems will not only support traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc. Embodiments of the present disclosure can also be applied to these communication systems.

In the embodiment of the present disclosure, the communication system can be applied to a Carrier Aggregation (CA) scenario, a Dual Connectivity (DC) scenario, and a Standalone (SA) network distribution scenario.

Embodiments of the present disclosure describe various embodiments in conjunction with a terminal device. The terminal device may also be referred to as User Equipment (UE), an access terminal, a subscriber unit, a subscriber station, a mobile radio station, a mobile station, a remote station, a remote terminal, a mobile device, a user terminal, a terminal, a wireless communication device, a user agent, a user device or a vehicle, etc.

In an embodiment of the present disclosure, the terminal device may be a station (ST) in a WLAN, and may be a cellular telephone, a cordless telephone, a Session Initiation Protocol (SIP) telephone, a Wireless Local Loop (WLL) station, a Personal Digital Assistant (PDA) device, a handheld device having wireless communication function, a computing device or another processing device connected to a wireless modem, a vehicle-mounted device, a wearable device, a terminal device in the next-generation communication system such as an NR network, or a terminal device in the future evolved Public Land Mobile Network (PLMN) network.

In an embodiment of the present disclosure, the terminal device may be deployed on land including indoors or outdoors, hand-held, wearable or vehicle-mounted. The terminal device can also be deployed on the water (such as ships, and the like). The terminal device can also be deployed in the air (such as airplanes, balloons and satellites, and the like).

In an embodiment of the present disclosure, the terminal device can be a Mobile Phone, a Pad, a computer with a wireless transceiver function, a Virtual Reality (VR) terminal device, a Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city or smart home, etc.

In an embodiment of the present disclosure, the terminal device may also be a wearable device. The wearable device may also be called a wearable intelligent device, which is generic term of a wearable device developed by applying wearable technology to intelligently design daily wear, such as glasses, gloves, watches, clothing and shoes. The wearable device is a portable device that is worn on the body directly or integrated into user's clothes or accessories. The wearable device is not only a hardware device, but also a powerful function realized through software support, data interaction and cloud interaction. A generalized wearable intelligent device includes full-featured, large size and complete or partial functions realized without relying on smart phones, such as smart watches or smart glasses, and includes only a certain application function, which is necessary to be used in conjunction with other devices such as a smart phone, such as various smart bracelets for monitoring physical signs, or smart jewelry and the like.

In an embodiment of the present disclosure, the network device may be a device that communicates with a mobile device. The network device may be an Access Point (AP) in the WLAN, a Base Transceiver Station (BTS) in the GSM or the CDMA, a NodeB (NB) in the WCDMA, an Evolved Node B (eNB or eNodeB) in the LTE, a relay station or an access point, a vehicle-mounted device, a wearable device, a network device (gNB) in a NR network, a network device in the future evolved PLMN network or the like.

In embodiments of the present disclosure, the network device may have mobility characteristics, for example, the network device may be a mobile device. In one example, the network device may be a satellite or a balloon station. For example, the satellite may be a Low Earth Orbit (LEO) satellite, a Medium Earth Orbit (MEO) satellite, a Geostationary Earth Orbit (GEO) satellite, a High Elliptical Orbit (HEO) satellite, and the like. In one example, the network device may also be a base station arranged on land, water and the like.

In an embodiment of the present disclosure, the network device provides services for a cell, and the terminal device communicates with the network device through transmission resources used by the cell (such as, frequency domain resources or spectrum resources). The cell may be a cell corresponding to the network device (such as, a base station), and the cell may belong to a macro base station or a base station corresponding to a small cell. The small cell here may include a metro cell, a micro cell, a pico cell, or a femto cell and the like. These small cells have characteristics of small coverage and low transmission power, which are suitable for providing high-speed data transmission services.

It is to be understood that terms "system" and "network" in the disclosure may usually be exchanged in the disclosure. In the disclosure, term "and/or" is only an association relationship describing associated objects, for example, represents that previous and next associated objects may have three relationships. For example, A and/or B may represent three conditions: i.e., independent existence of A, existence of both A and B, and independent existence of B. The character "/" in the disclosure usually represents that previous and next associated objects form an "or" relationship. In the description of embodiments of the present disclosure, the term "correspondence" may indicate a direct or indirect correspondence between the two elements, or may indicate an association between the two elements, or may indicate a relationship of indicating and being indicated, configuring and being configured, etc.

In order to clearly illustrate the ideas of the embodiments of the present disclosure, the contents related to the terminal device entering the connected mode in the communication system is described in brief firstly.

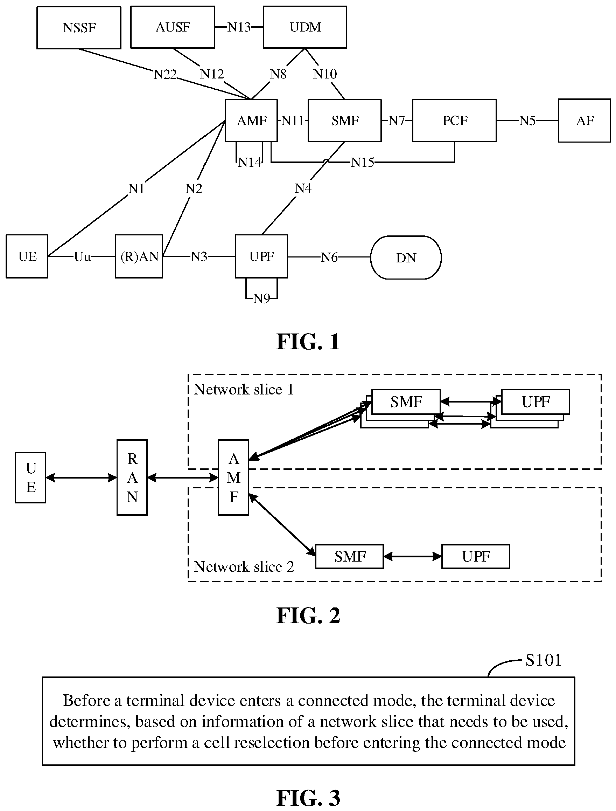

FIG. 1 shows a system architecture diagram of a 5G network where a network slice has been deployed. FIG. 2 shows an architectural of a network slice. In FIG. 2, a network slice 1 and a network slice 2 are provided, each network slice includes an Access and Mobility Management Function (AMF), a Session Management Function (SMF) and a User Plane Function (UPF). Different network slices can share a same AMF.

A network slice can be identified by Single Network Slice Selection Assistance Information (S-NSSAI). Considering a scenario where the UE may use multiple network slices, an NSSAI may be used to represent a set of S-NSSAIs, and the NSSAI indicates one or more S-NSSAIs.

When the UE needs to use one or more network slices according to a service requirement, the UE needs to request the network to use slices firstly, and specifically the following three processes can be performed.
1) The UE sends an S-NSSAI (e.g., slice 1, 2, 3) of one or more network slices that are requested to be used to a core network device (e.g., AMF) through a "Requested NSSAI".
2) The core network device determines an "allowed NSSAI" (e.g., slice 1, and slice 2) according to a scope of UE subscription and network slice deployment, and sends the allowed NSSAI to the UE through a "Registration accept"; and the core network device sends the allowed NSSAI to the radio access network (RAN) device through a "N2 message".
3) After the UE receives the allowed NSSAI, the UE can select a network slice corresponding to the service from one or more network slices indicated by the allowed NSSAI and establish a PDU session. After the PDU session is established, the UE can use the PDU session to send and receive service data.

During network deployment, the coverage of each slice may be different. When the core network device such as the AMF determines the allowed NSSAI, it is needed to ensure that all slices indicated by the allowed NSSAI can cover a "Registration area" (such as tracking area TA list) allocated by AMF to UE. The AMF can obtain the S-NSSAI of one or more network slices supported by the base station and corresponding Tracking Area (TA) information from the base station through a "NG setup request" signaling or a "RAN configuration update" signaling.

For the UE in the idle mode or in the inactive mode, with regard to the allowed NSSAI, the following processing can be performed: the UE in the idle mode or in the inactive mode can obtain information about one or more slices supported by the base station and priority information of frequencies supported by the slices by reading the information broadcast by the cell; and the UE in the idle mode or in the inactive mode selects a slice supporting the current service and a cell corresponding a frequency with a high priority. The non-access stratum (NAS) layer of the UE can provide allowed NSSAI to the access layer, thereby ensuring that the UE can select a suitable cell for access to prepare for subsequent service transmission.

When a new service requirement occurs for the UE in the idle mode or in the inactive mode and a network slice corresponding to the service is not one of the one or more network slices indicated by the allowed NSSAI, the UE still needs to access a currently selected cell firstly (only allowed NSSAI is considered), after a connection with the network is established, the UE requests a new network slice from the core network device. However, the currently accessed cell may not support the new network slice or the currently accessed cell is not the cell with a high priority frequency corresponding to the new network slice. The network may reject the new network slice requested by the UE, and release the connection to make the UE enter the idle mode, then the UE needs to perform cell reselection again to access a suitable cell. The above process may cause the interruption of the UE service, affect the user experience and waste signaling.

To this end, embodiments of the present disclosure provide a method for entering a connected mode, which is applied to a terminal device. With reference to FIG. 3, the method includes the following operation.

In S101, before the terminal device enters the connected mode, the terminal device determines, based on information of a network slice that needs to be used, whether to perform a cell reselection before entering the connected mode.

Before entering the connected mode includes a duration between a time when the terminal device has a service requirement and a time before the terminal device enters the connected mode; or a duration between a time after an access layer of the terminal device receives a trigger from an NAS layer and a time before the terminal device enters the connected mode. That is to say, when a new service transmission requirement occurs or an access layer is triggered, the UE does not directly enter the connected mode, but the UE first determines, based on information of a network slice that needs to be used, whether to perform a cell reselection before entering the connected mode, so that a suitable cell can be selected before entering the connected mode. In this way, it can be ensured that the accessed cell supports the network slice required for a current service after the terminal device enters the connected mode, and the service interruption caused by the cell reselection can be avoided after the terminal device accesses the cell, which affects the user experience.

According to the embodiment of the present disclosure, optionally, the information of the network slice that needs to be used includes at least one of: information of a network slice that needs to be used by a current service of the terminal device; allowed NSSAI; or network slice information of a PDU session.

According to an embodiment of the present disclosure, optionally, the access layer or the NAS layer of the terminal device may determine whether to perform the cell reselection before entering the connected mode. Multiple embodiments are provided below to describe the implementations.

Manner 1, the access layer determines whether to perform the cell reselection before entering the connected mode.

According to an embodiment of the present disclosure, optionally, it is assumed that the current service of the terminal device needs to use a first network slice, any one of the following four processes may be performed.
(1) If the terminal device determines that the first network slice is a network slice among one or more network slices indicated by an allowed NSSAI, the NAS layer of the terminal device sends information of the first network slice to the access layer of the terminal device.
(2) If the terminal device determines that the first network slice is a network slice among one or more network slices indicated by an allowed NSSAI, an NAS layer sends no information of a network slice to the access layer.
(3) If the terminal device determines that the first network slice is not a network slice among one or more network slices indicated by an allowed NSSAI, the NAS layer of the terminal device sends information of the first network slice to the access layer of the terminal device.
(4) If the terminal device determines that the first network slice is not a network slice among one or more network slices indicated by an allowed NSSAI, the NAS layer of the terminal device sends information of the first network slice and the allowed NSSAI to the access layer of the terminal device.

According to an embodiment of the present disclosure, optionally, after the access layer of the terminal device receives the information of the first network slice sent by the NAS layer, when the information of the first network slice is in the one or more network slices indicated by the allowed NSSAI and when a priority of a frequency corresponding to the first network slice of a camping cell (i.e., a cell on which the terminal device is currently camping) is higher, the access layer of the terminal device determines that no cell reselection is performed before entering the connected mode.

In this case, optionally, the case where the priority of the frequency corresponding to the first network slice of the camping cell is higher may be any one of the following two cases.

The camping cell supports the first network slice, and the camping cell is a cell with the highest priority of the frequency corresponding to the first network slice.

·The camping cell supports the first network slice, and the camping cell is not a cell with the lowest priority of the frequency corresponding to the first network slice.

For example, the frequency 1 corresponding to the first network slice has a highest priority, the frequency 2 has a lowest priority, and the priority of the frequency 3 is between the highest priority and the lowest priority. Then the camping cell can be a cell corresponding to the frequency 1 or a cell corresponding to the frequency 3.

According to an embodiment of the present application, optionally, after the access layer of the terminal device receives the information of the first network slice sent by the NAS layer, the access layer of the terminal device determines to perform the cell reselection before entering the connected mode, when at least one of the following is satisfied: the information of the first network slice is not in the one or more network slices indicated by the allowed NSSAI; or the priority of the frequency corresponding to the first network slice of the camping cell is lower.

In this case, optionally, the case where the priority of the frequency corresponding to the first network slice of the camping cell is lower may be any one of the following two cases.

·The camping cell supports the first network slice, and the camping cell is the cell with the lowest priority of the frequency corresponding to the first network slice.

·The camping cell supports the first network slice, and the camping cell is not the cell with the highest priority of the frequency corresponding to the first network slice.

For example, the frequency 1 corresponding to the first network slice has the highest priority, the frequency 2 has the lowest priority, and the priority of the frequency 3 is between the highest priority and the lowest priority. Then the camping cell can be the cell corresponding to the frequency 2 or the cell corresponding to the frequency 3.

According to the embodiment of the present disclosure, optionally, if the access layer of the terminal device determines to perform the cell reselection before entering the connected mode, when the terminal device performs the cell reselection, the terminal device selects a cell with a highest priority of the frequency corresponding to the first network slice among cells supporting the first network slice to enter the connected mode.

Manner 2: The NAS layer determines whether to perform the cell reselection before entering the connected mode.

According to an embodiment of the present application, optionally, after the access layer of the terminal device selects the camping cell, the access layer sends information of the network slice supported by the camping cell and priority information of a frequency corresponding to the network slice supported by the camping cell to the NAS layer.

According to an embodiment of the present disclosure, optionally, the access layer also sends information of a network slice supported by a neighbour cell of a camping cell and priority information of a frequency corresponding to the network slice supported by the neighbour cell to the NAS layer.

According to an embodiment of the present disclosure, optionally, it is assumed that a current service of the terminal device needs to use a second network slice, the following processing can be performed. The NAS layer determines whether to perform the cell reselection before entering the connected mode by determining whether the camping cell supports the second network slice and whether a frequency corresponding to the camping cell has a highest priority.

Optionally, further processing can be performed according to any one of the following two situations.
(1) If the camping cell does not support the second network slice, or when the camping cell supports the second network slice but the frequency corresponding to the second network slice of the camping cell does not have the highest priority, the NAS layer determines that the cell reselection needs to be performed before entering the connected mode, and the NAS layer notifies the access layer to perform the cell reselection.
(2) If the camping cell supports the second network slice and the frequency corresponding to the second network slice of the camping cell has the highest priority, the NAS layer determines that no cell reselection needs to be performed before entering the connected mode, and the NAS layer notifies the access layer to enter the connected mode directly.

According to an embodiment of the present disclosure, the access layer optionally determines, according to an instruction of the NAS layer, to perform the cell reselection or not to perform the cell reselection before entering the connected mode.

According to an embodiment of the present disclosure, the access layer of the terminal device can select the network slice supporting the new service and the cell with the highest priority of the frequency before entering the connected mode, thus avoiding unnecessary cell re-selection, thereby ensuring that the subsequent session establishment and service transmission are not affected.

The implementations of the method for entering the connected mode according to the embodiments of the present disclosure has been described above by the embodiments, and the specific implementation process of the embodiments of the present disclosure will be described below by multiple specific examples.

### Example 1

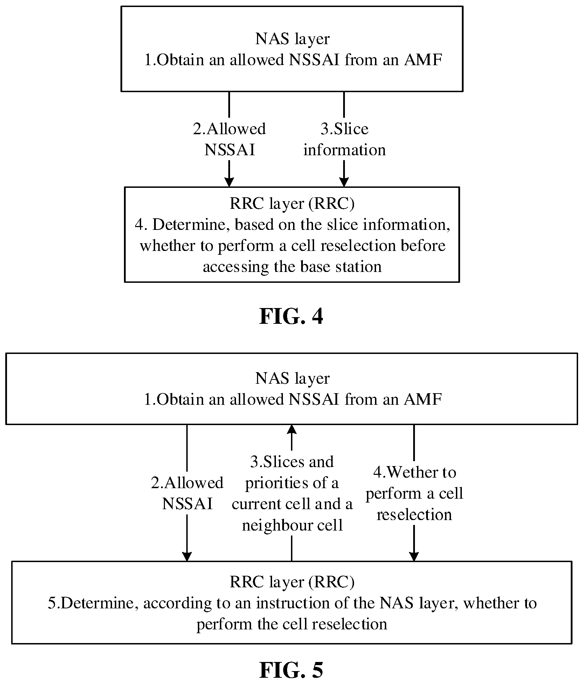

In this example, the access layer of the terminal device determines whether to perform a cell reselection before entering the connected mode. FIG. 4 schematically shows a process of a terminal device entering a connected mode according to an embodiment of the present disclosure. The processing procedure disclosed in this example is described below according to FIG. 4.
1. The UE registers with the network, obtains the allowed NSSAI from the AMF, and establishes the PDU session corresponding to the service. For example, allowed NSSAI includes slice 1 and slice 2.
2. The NAS layer of the UE provides slice information to the access layer (e.g., the Radio Resource Control (RRC) layer). The slice information can be allowed NSSAI (e.g., slice 1 and slice 2 used in the idle mode) or slice information corresponding to PDU session (e.g., slice 1 and slice 2 used in the inactive mode). The NAS layer of the UE can send the allowed NSSAI to the RRC layer immediately after receiving the allowed NSSAI, or the NAS layer of the UE can send the allowed NSSAI to the RRC layer after the UE enters the idle mode or the inactive mode. For UE in the idle mode or in the inactive mode, cell information, information of the slices supported by cell, the priority of the respective frequency corresponding to each slice and other information can be obtained through system broadcast information. If the UE in the idle mode or in the inactive mode moves (the cell handover needs to be performed), the access layer of the UE will select the cell with the highest priority of the frequency corresponding to a received slice to reside.
3. When the UE has a service transmission requirement, the NAS layer of the UE can trigger the access layer to enter the connected mode and send the slice information that needs to be used to the access layer of the UE. The NAS layer of the UE sends the slice information corresponding to the service to the access layer of the UE. Specifically, the UE determines whether the service needs to use a slice (such as slice 1 or slice 2) among one or more network slices indicated by the existing allowed NSSAI or needs to use a new slice (such as slice 3). If a slice (such as slice 1) among one or more network slices indicated by the existing allowed NSSAI needs to be used, the NAS layer of the UE can send the NSSAI of the slice (such as slice 1) corresponding to the service to the access layer, or not send (i.e., in this case, the NAS layer of the UE does not send the slice information to the access layer). If the service needs to use a new slice (such as Slice 3), the NAS layer of the UE may send the S-NSSAI of the new slice (S-NSSAI of Slice 3) to the access layer of the UE, or send the NSSAI of the new slice and the allowed NSSAI (S-NSSAIs of slices 1, 2 and 3) to the access layer of the UE.
4. After receiving the slice information sent by the NAS layer, the access layer determines whether the slice information is in the allowed NSSAI, and whether there is a cell with higher priority of the frequency corresponding to the slice information around. If the slice information is in the allowed NSSAI and the priority of the frequency of the camping cell is already the highest priority, the camping cell is taken as the final selected cell to establish connection and enter the connected mode. If the slice information is not in the allowed NSSAI, or the slice information is in the allowed NSSAI but the cell with the highest priority of the frequency corresponding to the slice information is not the camping cell (for example, being a neighbour cell), the access layer needs to perform cell reselection again before establishing the connection. During performing the cell reselection, a new slice (if any) should be taken into account, and the cell supporting the new slice and corresponding to the frequency with the highest priority in the slice should be selected.

### Example 2

In this example, the NAS layer of the terminal device determines whether to perform the cell reselection before entering the connected mode. FIG. 5 schematically shows a process of a terminal device entering a connected mode according to an embodiment of the present disclosure. The processing procedure disclosed in this example is described below according to FIG. 5.
1. The UE registers with the network and obtains the allowed NSSAI from the AMF.
2. The NAS layer of the UE provides the received allowed NSSAI to the access layer (e.g., the RRC layer). The NAS layer can send the allowed NSSAI to the RRC layer immediately after receiving the allowed NSSAI, or the NAS layer can also send the allowed NSSAI to the RRC layer after the UE enters the idle mode or the inactive mode. Then, when the UE moves and needs to perform the cell handover, the access layer of the UE selects the cell to reside with reference to the allowed NSSAI.
3. After the access layer selects the cell, the access layer may send the slice supported by the camping cell and the corresponding priority information of the frequency in the system information to the NAS layer. The access layer can send information of the network slice supported by a neighbour cell of a camping cell and priority information of the frequency corresponding to the network slice supported by the neighbour cell to the NAS layer.
4. When the UE has a service transmission requirement, the NAS layer of the UE determines whether to trigger the access layer to perform the cell reselection. Specifically, the determination includes determining whether the camping cell supports the slice of the service and whether the frequency corresponding to the slice of the service has a highest priority. If the camping cell does not support the slice of the service, or the frequency corresponding to the slice of the service in the camping cell does not have the highest priority, the NAS layer determines that the cell reselection needs to be performed before entering the connected mode and the NAS layer notifies the access layer to perform the cell reselection. If the camping cell supports the slice of the service and the frequency corresponding to the slice of the service in the camping cell has the highest priority, the NAS layer determines that no cell reselection needs to be performed before entering the connected mode, and the NAS layer notifies the access layer to enter the connected mode directly.
5. The access layer determines, according to an instruction of the NAS layer, whether to perform the cell reselection or not to perform the cell reselection before entering the connected mode.

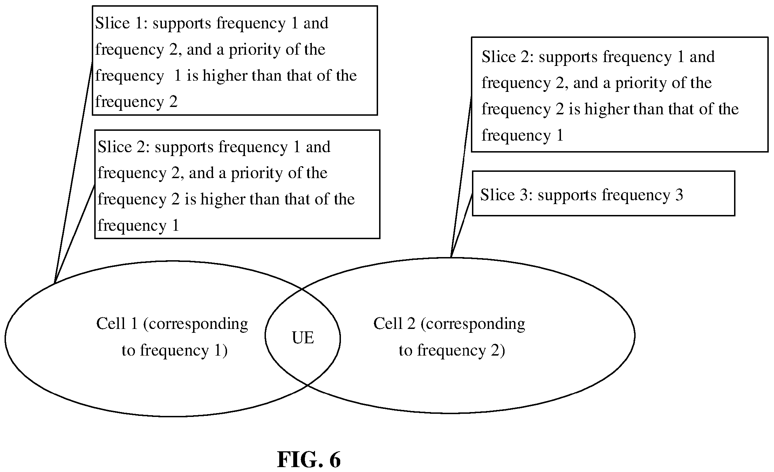

Taking FIG. 6 as an example, the process of cell reselection will be explained below. The UE in FIG. 6 is located in an area jointly covered by cell 1 and cell 2. The cell 1 supports slice 1 and slice 2.

·The slice 1 supports frequency 1 and frequency 2, and the priority of frequency 1 is higher than that of frequency 2.

·The slice 2 supports frequency 1 and frequency 2, and the priority of frequency 2 is higher than that of frequency 1.

In FIG. 6, the cell 2 supports slice 2 and slice 3.

·The slice 2 supports frequency 1 and frequency 2, and the priority of frequency 2 is higher than that of frequency 1.

·The slice 3 supports frequency 3.

For the UE in FIG. 6, when the UE is in the idle mode or in the inactive mode, the UE can obtain the above slice information of the cell 1 and the cell 2 through the system broadcast. According to the above at least one embodiment of the present disclosure, if UE determines that the cell reselection is performed before entering the connected mode, and the current service of the UE needs to use the slice 1, then the cell (cell 1) corresponding to the frequency 1 with higher priority in the slice 1 is selected for access. If the current service of the UE needs to use the slice 2, the cell (cell 2) corresponding to the frequency 2 with higher priority in the slice 2 is selected for access.

According to at least one embodiment of the present disclosure, the access layer can select the cell supporting the slice of the new service and corresponding to the frequency with the highest priority in the slice before entering the connected mode, so as to ensure that the processes of the subsequent session establishment and the service transmission are not interrupted due to the cell reselection.

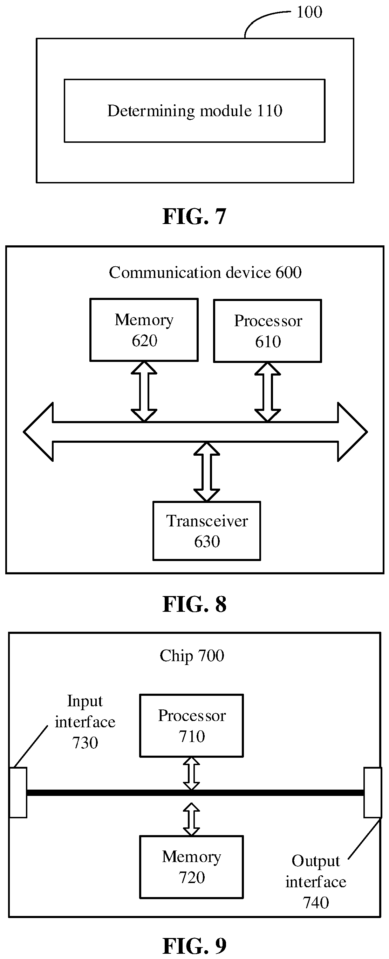

The specific arrangements and implementations of the embodiments of the present disclosure have been described above from different aspects through multiple embodiments. The embodiments of the present disclosure also provide a terminal device 100 corresponding to the processing method of at least one embodiment described above, with reference to FIG. 7, the terminal device 100 includes a determining module 110.

The determining module 110 is configured to determine, based on information of a network slice that needs to be used, whether to perform a cell reselection before entering the connected mode, before the terminal device enters the connected mode.

Optionally, the determining module includes an access layer logic module. The access layer logic module is configured to determine, based on the information of the network slice that needs to be used, whether to perform the cell reselection before entering the connected mode.

Optionally, the determining module also includes a non-access layer logic module. In a case where a current service of the terminal device needs to use a first network slice, when the terminal device determines that the first network slice is a network slice among one or more network slices indicated by an allowed NSSAI, the non-access layer logic module is configured to send information of the first network slice to the access layer logic module; or, when the terminal device determines that the first network slice is a network slice among one or more network slices indicated by an allowed NSSAI, the non-access layer logic module is configured to send, no information of a network slice to the access layer logic module.

Optionally, the determining module also includes a non-access layer logic module. In a case where a current service of the terminal device needs to use a first network slice, when it is determined that the first network slice is not a network slice among one or more network slices indicated by an allowed NSSAI, the non-access layer logic module of the terminal device is configured to send information of the first network slice to the access layer logic module; or when it is determined that the first network slice is not a network slice among one or more network slices indicated by an allowed NSSAI, the non-access layer logic module is configured to send information of the first network slice and the allowed NSSAI to the access layer logic module.

Optionally, after the access layer logic module receives the information of the first network slice sent by the non-access layer logic module, the access layer logic module is configured to determine that no cell reselection is performed before entering the connected mode, when the information of the first network slice is in the one or more network slices indicated by the allowed NSSAI and when a priority of a frequency corresponding to the first network slice of a camping cell is higher.

Optionally, after the access layer logic module receives the information of the first network slice sent by the non-access layer logic module, the access layer logic module is configured to determine to perform the cell reselection before entering the connected mode, in a case where at least one of the following is satisfied: the information of the first network slice is not in the one or more network slices indicated by the allowed NSSAI; or a priority of a frequency corresponding to the first network slice of a camping cell is lower.

Optionally, during performing the cell reselection, the terminal device is configured to select a cell with a highest priority of the frequency corresponding to the first network slice among cells supporting the first network slice to enter the connected mode.

Optionally, the determining module includes a non-access layer logic module configured to determine, based on the information of the network slice that needs to be used, whether to perform the cell reselection before entering the connected mode.

Optionally, the determining module further includes an access layer logic module. The access layer logic module is configured to, after an access layer of the terminal device selects a camping cell, send information of a network slice supported by the camping cell and priority information of a frequency corresponding to the network slice supported by the camping cell to the non-access layer logic module.

Optionally, the access layer logic module is further configured to send information of a network slice supported by a neighbour cell of a camping cell and priority information of a frequency corresponding to the network slice supported by the neighbour cell to the non-access layer logic module.

Optionally, in a case where a current service of the terminal device needs to use a second network slice, the non-access layer logic module is configured to determine whether to perform the cell reselection before entering the connected mode by determining whether the camping cell supports the second network slice and whether a frequency corresponding to the camping cell has a highest priority.

Optionally, when the camping cell does not support the second network slice, or when the camping cell supports the second network slice but the frequency corresponding to the second network slice of the camping cell does not have the highest priority, the non-access layer logic module is configured to determine that the cell reselection needs to be performed before entering the connected mode and notify the access layer logic module to perform the cell reselection.

Optionally, the non-access layer logic module is also configured to determine that no cell reselection is performed before entering the connected mode and notify the access layer logic module when the camping cell supports the second network slice and the frequency corresponding to the camping cell has the highest priority.

Optionally, the access layer logic module is further configured to determine, according to an instruction of the non-access layer logic module, to perform the cell reselection or not to perform the cell reselection before entering the connected mode.

Before entering the connected mode includes: a duration between a time after an access layer of the terminal device receives a trigger from an NAS layer and a time before the terminal device enters the connected mode; or before entering the connected mode includes: a duration between a time when the terminal device has a service requirement and a time before the terminal device enters the connected mode.

The terminal device 100 in the embodiments of the present disclosure can implement the corresponding functions of the device in the aforementioned method embodiments. The flow, function, implementation and beneficial effects corresponding to each module (sub-module, unit or component, etc.) in the terminal device 100 can be referred to the corresponding description in the above method embodiments, and will not be described repeatedly herein.

It is to be noted that, the functions described with respect to modules (sub-modules, units or components, etc.) in the terminal device 100 of the embodiments of the present disclosure may be implemented by different modules (sub-modules, units or components, etc.) or by the same module (sub-module, unit or component, etc.). For example, a first sending module and a second sending module may be different modules or the same module, which all can implement the corresponding functions of the terminal device according to the embodiments of the present disclosure. In addition, the transmitting module and the receiving module in the embodiments of the present disclosure can be implemented by a transceiver of the device, and some or all of the remaining modules can be implemented by the processor of the device.

FIG. 8 is a schematic structural diagram of a communication device 600 according to an embodiment of the present disclosure. The communication device 600 includes a processor 610. The processor 610 may call and run computer programs from a memory to cause the communication device 600 to implement the method for entering the connected mode in the embodiments of the present disclosure.

Optionally, the communication device 600 may also include a memory 620. The processor 610 may call and run computer programs from the memory 620 to implement the method for entering the connected mode in the embodiments of the present disclosure.

The memory 620 may be a separate device independent of the processor 610 or may be integrated in the processor 610.

Optionally, the communication device 600 may also include a transceiver 630. The processor 610 may control the transceiver 630 to communicate with other devices and specifically, may send information or data to other devices or receive information or data from other devices. The transceiver 630 may include a transmitter and a receiver. The transceiver 630 may further include an antenna(s), and the number of the antenna(s) may be one or more.

Optionally, the communication device 600 may be a network device of the embodiments not being part of the present invention, and the communication device 600 may implement corresponding flows implemented by the network device in each method of the embodiments of the present disclosure, which will not be elaborated herein for brevity.

Optionally, the communication device 600 may be the terminal device in the embodiments of the present disclosure, and the communication device 600 may implement corresponding flows implemented by the terminal device in each method of the embodiments of the present disclosure, which will not be elaborated herein for brevity.

FIG. 9 is a schematic structural diagram of a chip according to an embodiment of the present disclosure. The chip 700 includes a processor 710, and the processor 710 may call and run computer programs from a memory to implement the method for entering the connected mode in the embodiments of the disclosure. The processor 710 may include at least one processor circuit.

Optionally, the chip 700 may also include a memory 720. The processor 710 may call and run the computer programs from the memory 720 to implement the method of entering a connected mode in embodiments of the present disclosure. The memory 720 may be a separate device independent of or integrated into the processor 710.

Optionally, the chip 700 may also include an input interface 730. The processor 710 may control the input interface 730 to communicate with another device or chip, and specifically to acquire information or data from the another device or chip.

Optionally, the chip 700 may also include an output interface 740. The processor 710 may control the output interface 740 to communicate with another device or chip, and specifically to output information or data to the another device or chip.

Optionally, the chip may be applied to the network device in the embodiments of the present disclosure, and the chip may implement corresponding flows implemented by the network device in each method of the embodiments of the present disclosure, which will not be elaborated herein for brevity.

Optionally, the chip may be applied to the terminal device in the embodiments of the present disclosure in FIG. 7, and the chip may implement corresponding flows implemented by the terminal device in each method of the embodiments of the present disclosure, which will not be elaborated herein for brevity.

It is to be understood that the chips mentioned in the embodiments of the present disclosure may also be referred to as system level chips, system chips, chip systems or on-chip system chips, etc.

The above processors may be general purpose processors, Digital Signal Processors (DSPSs), Field Programmable Gate Arrays (FPGAs), Application Specific Integrated Circuits (ASICs) or other programmable logic devices, discrete gate or transistor logic devices, and discrete hardware components. The general-purpose processor may be a microprocessor or any conventional processor or the like.

The memory mentioned above may be a volatile memory or a non-volatile memory or may include both the volatile memory and the non-volatile memory. The non-volatile memory may be Read-only Memory (ROM), Programmable ROM (PROM), Erasable programmable ROM (EPROM), Electrically EPROM (EEPROM) or flash memory. The volatile memory may be a Random Access Memory (RAM).

It is to be understood that the above memory is exemplary but not restrictive. For example, the memory in the embodiments of the present disclosure may also be Static RAM (SRAM), Dynamic RAM (DRAM), Synchronous DRAM (SDRAM), Double Data Rate SDRAM (DDR SDRAM), Enhanced SDRAM (ESDRAM), Synch Link DRAM (SLDRAM), Direct Rambus RAM (DR RAM), etc. That is to say, the memory in the embodiments of the present disclosure is intended to include, but is not limited to, these and any other suitable types of memory.

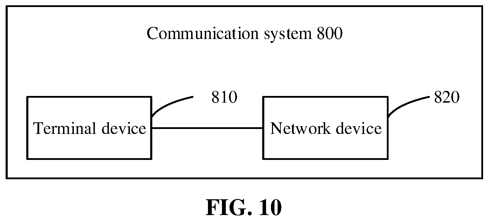

FIG. 10 is a schematic diagram of a communication system 800 according to an embodiment of the present disclosure. The communication system 800 includes a terminal device 810 and a network device 820.

The terminal device 810 may be configured to implement corresponding functions implemented by the terminal device in the methods for entering the connected mode in various embodiments of the present disclosure, and the network device 820 may be configured to implement corresponding functions implemented by the network device in the methods of various embodiments of the present disclosure. For the sake of brevity, it will not be elaborated herein.

The foregoing embodiments may be implemented in whole or in part by software, hardware, firmware, or any combination thereof. When implemented by software, it may be implemented in whole or in part in the form of a computer program product. The computer program product includes one or more computer instructions. When the computer program instructions are loaded and executed by a computer, all or part of the processes or functions according to the embodiments of the present disclosure are generated. The computer may be a general-purpose computer, a special-purpose computer, a computer network, or other programmable devices. The computer instructions may be stored in a computer-readable storage medium or transmitted from a computer-readable storage medium to another computer-readable storage medium. The computer instructions may be transmitted from a website site, computer, server, or data center to another website site, computer, server, or data center in a wired (such as a coaxial cable, an optical fiber, and a Digital Subscriber Line (DSL)) or wireless (such as infrared, wireless, and microwave) manner. The computer-readable storage medium may be any available medium that may be accessed by a computer or a data storage device such as a server including one or more available medium integrations and a data center. The available medium may be a magnetic medium (such as a floppy disk, a hard disk, and a magnetic tape), an optical medium (such as a Digital Versatile Disc (DVD)), a semiconductor medium (such as a Solid State Disk (SSD)), or the like.

It should be understood that, in various embodiments of the present disclosure, a magnitude of a sequence number of each process does not mean an execution sequence and the execution sequence of each process should be determined by its function and an internal logic and should not constitute any limit to an implementation process of the embodiments of the disclosure.

## Claims

1. A method for entering a connected mode, performed by a terminal device, the method comprising:
before the terminal device enters the connected mode, determining (S101), by the terminal device based on information of a network slice that needs to be used, whether to perform a cell reselection before entering the connected mode,
**characterized in that** before entering the connected mode comprises:
a duration between a time after an access layer of the terminal device receives a trigger from an non-access stratum, NAS, layer and a time before the terminal device enters the connected mode.

2. The method of claim 1, wherein the information of the network slice that needs to be used comprises at least one of:
information of a network slice that needs to be used by a current service of the terminal device; or
network slice information of a protocol data unit, PDU, session.

3. The method of any one of claims 1 to 2, wherein determining, by the terminal device based on the information of the network slice that needs to be used, whether to perform the cell reselection before entering the connected mode comprises:
determining, by an access layer of the terminal device based on the information of the network slice that needs to be used, whether to perform the cell reselection before entering the connected mode.

4. The method of claim 3, further comprising: in a case where a current service of the terminal device needs to use a first network slice,
when the terminal device determines that the first network slice is not a network slice among one or more network slices indicated by allowed network slice selection assistance information, NSSAI, sending, by the NAS layer of the terminal device, information of the first network slice to the access layer of the terminal device; or
when the terminal device determines that the first network slice is not a network slice among one or more network slices indicated by allowed NSSAI, sending, by the NAS layer of the terminal device, information of the first network slice and the allowed NSSAI to the access layer of the terminal device.

5. The method of claim 4, further comprising:
after the access layer of the terminal device receives the information of the first network slice sent by the NAS layer, determining, by the access layer of the terminal device, to perform the cell reselection before entering the connected mode, when at least one of the following is satisfied:
the information of the first network slice is not in the one or more network slices indicated by the allowed NSSAI; or
a priority of a frequency corresponding to the first network slice of a camping cell is lower.

6. The method of claim 5, further comprising:
during performing the cell reselection, selecting, by the terminal device, a cell with a highest priority of the frequency corresponding to the first network slice among cells supporting the first network slice to enter the connected mode.

7. A terminal device comprising:
a determining module (100), configured to determine, based on information of a network slice that needs to be used, whether to perform a cell reselection before entering a connected mode, before the terminal device enters the connected mode,
**characterized in that** before entering the connected mode comprises:
a duration between a time after an access layer of the terminal device receives a trigger from an non-access stratum, NAS, layer and a time before the terminal device enters the connected mode.

8. The terminal device of claim 7, wherein the information of the network slice that needs to be used comprises at least one of:
information of a network slice that needs to be used by a current service of the terminal device; or
network slice information of a protocol data unit, PDU, session.

9. The terminal device of any one of claims 7 to 8, wherein the determining module (100) comprises an access layer logic module, configured to determine, based on the information of the network slice that needs to be used, whether to perform the cell reselection before entering the connected mode.

10. The terminal device of claim 9, wherein the determining module (100) further comprises a non-access layer logic module, in a case where a current service of the terminal device needs to use a first network slice,
when the terminal device determines that the first network slice is not a network slice among one or more network slices indicated by allowed network slice selection assistance information, NSSAI, the non-access layer logic module of the terminal device is configured to send information of the first network slice to the access layer logic module; or
when the terminal device determines that the first network slice is not a network slice among one or more network slices indicated by allowed NSSAI, the non-access layer logic module is configured to send information of the first network slice and the allowed NSSAI to the access layer logic module.

11. The terminal device of claim 10, wherein
after the access layer logic module receives the information of the first network slice sent by the non-access layer logic module, the access layer logic module is configured to determine to perform the cell reselection before entering the connected mode, when at least one of the following is satisfied:
the information of the first network slice is not in the one or more network slices indicated by the allowed NSSAI; or
a priority of a frequency corresponding to the first network slice of a camping cell is lower.

12. The terminal device of claim 11, wherein during performing the cell reselection, the terminal device is configured to select a cell with a highest priority of the frequency corresponding to the first network slice among cells supporting the first network slice to enter the connected mode.

13. A chip comprising:
a processor, configured to invoke and run computer programs from a memory to cause a terminal device on which the chip is mounted to perform the method of any one of claims 1 to 6.

## Patentansprüche

1. Verfahren zum Eintritt in einen verbundenen Zustand, durchgeführt von einem Endgerät, wobei das Verfahren Folgendes umfasst:
bevor das Endgerät in den verbundenen Zustand eintritt, Bestimmen (S101), durch das Endgerät auf der Grundlage von Informationen über eine Netzwerkscheibe, die verwendet werden muss, ob eine Zellenwiederauswahl vor dem Eintritt in den verbundenen Zustand durchgeführt werden soll,
**dadurch gekennzeichnet, dass** das Verfahren vor dem Eintritt in den verbundenen Zustand Folgendes umfasst:
eine Zeitspanne zwischen einem Zeitpunkt, nachdem eine Zugriffsschicht des Endgerätes einen Trigger von einer Nicht-Zugriffsschicht, NAS, empfängt, und einem Zeitpunkt, bevor das Endgerät in den verbundenen Zustand eintritt.

2. Verfahren nach Anspruch 1,
wobei die zu verwendende Information der Netzwerkscheibe mindestens eines der folgenden Elemente umfasst:
Informationen über eine Netzwerkscheibe, die von einem aktuellen Dienst des Endgerätes genutzt werden muss; oder
Netzwerkscheibeninformationen einer Protokolldateneinheit, PDU,-Sitzung.

3. Verfahren nach einem der Ansprüche 1 bis 2,
wobei das Bestimmen, durch das Endgerät auf der Grundlage der Informationen über die zu verwendende Netzwerkscheibe, ob die Zellenwiederauswahl vor dem Eintritt in den verbundenen Zustand durchgeführt werden soll, Folgendes umfasst:
Bestimmen, durch eine Zugangsschicht des Endgerätes auf der Grundlage der Informationen über die zu verwendende Netzwerkscheibe, ob die Zellenwiederauswahl vor dem Eintritt in den verbundenen Zustand durchgeführt werden soll.

4. Verfahren nach Anspruch 3, das ferner Folgendes umfasst:
in einem Fall, in dem ein aktueller Dienst des Endgerätes eine erste Netzwerkscheibe verwenden muss,
wenn das Endgerät feststellt, dass die erste Netzwerkscheibe keine Netzwerkscheibe unter einer oder mehreren Netzwerkscheiben ist, die durch die Unterstützungsinformation für die Auswahl der erlaubten Netzwerkscheibe, NSSAI, angegeben sind, Senden, durch die NAS-Schicht des Endgerätes, von Informationen der ersten Netzwerkscheibe an die Zugriffsschicht des Endgerätes; oder
wenn das Endgerät feststellt, dass die erste Netzwerkscheibe keine Netzwerkscheibe unter einer oder mehreren Netzwerkscheiben ist, die durch die erlaubte NSSAI angezeigt werden, Senden, durch die NAS-Schicht des Endgerätes, von Informationen über die erste Netzwerkscheibe und die erlaubte NSSAI an die Zugriffsschicht des Endgerätes.

5. Verfahren nach Anspruch 4, das ferner Folgendes umfasst:
nachdem die Zugriffsschicht des Endgerätes die von der NAS-Schicht gesendeten Informationen über die erste Netzwerkscheibe empfangen hat, Bestimmen, durch die Zugriffsschicht des Endgerätes, die Zellenwiederauswahl vor dem Eintritt in den verbundenen Zustand durchzuführen, wenn mindestens eine der folgenden Bedingungen erfüllt ist:
die Informationen der ersten Netzwerkscheibe sind nicht in dem einen oder den mehreren Netzwerkscheiben, die durch die zulässige NSSAI angegeben sind, enthalten; oder
die Priorität einer Frequenz, die der ersten Netzwerkscheibe einer Campingzelle entspricht, ist niedriger.

6. Verfahren nach Anspruch 5, das ferner Folgendes umfasst:
während der Durchführung der Zellenwiederauswahl, Auswählen, durch das Endgerät, einer Zelle mit der höchsten Priorität der Frequenz, die der ersten Netzwerkscheibe entspricht, unter den Zellen, die die erste Netzwerkscheibe unterstützen, um in den verbundenen Zustand einzutreten.

7. Endgerät, das Folgendes umfasst:
ein Bestimmungsmodul (100), das so ausgebildet ist, dass es auf der Grundlage von Informationen über eine zu verwendende Netzwerkscheibe bestimmt, ob eine Zellenwiederauswahl vor dem Eintritt in einen verbundenen Zustand durchgeführt werden soll, bevor das Endgerät in den verbundenen Zustand eintritt,
**dadurch gekennzeichnet, dass** das Endgerät vor dem Eintritt in den verbundenen Zustand Folgendes umfasst:
eine Zeitspanne zwischen einem Zeitpunkt, nachdem eine Zugriffsschicht des Endgerätes einen Trigger von einer Nicht-Zugriffsschicht, NAS, empfängt, und einem Zeitpunkt, bevor das Endgerät in den verbundenen Zustand eintritt.

8. Endgerät nach Anspruch 7,
wobei die zu verwendende Information der Netzwerkscheibe mindestens eines der folgenden Elemente umfasst:
Informationen über eine Netzwerkscheibe, die von einem aktuellen Dienst des Endgerätes genutzt werden muss; oder
Netzwerkscheibeninformationen einer Protokolldateneinheit, PDU,-Sitzung.

9. Endgerät nach einem der Ansprüche 7 bis 8,
wobei das Bestimmungsmodul (100) ein Logikmodul der Zugriffsschicht umfasst, das so ausgebildet ist, dass es auf der Grundlage der Informationen über die zu verwendende Netzwerkscheibe bestimmt, ob die Zellenwiederauswahl vor dem Eintritt in den verbundenen Zustand durchgeführt werden soll.

10. Endgerät nach Anspruch 9,
wobei das Bestimmungsmodul (100) ferner ein Logikmodul für die Nicht-Zugangsschicht umfasst, wenn ein aktueller Dienst des Endgerätes eine erste Netzwerkscheibe verwenden muss,
wenn das Endgerät feststellt, dass die erste Netzwerkscheibe keine Netzwerkscheibe unter einer oder mehreren Netzwerkscheiben ist, die durch eine Unterstützungsinformation für die Auswahl von erlaubten Netzwerkscheiben, NSSAI, angezeigt werden, ist das Logikmodul der Nicht-Zugangsschicht des Endgerätes so konfiguriert, dass es Informationen der ersten Netzwerkscheibe an das Logikmodul der Zugangsschicht sendet; oder
wenn das Endgerät feststellt, dass die erste Netzwerkscheibe keine Netzwerkscheibe unter einer oder mehreren Netzwerkscheiben ist, die durch die erlaubte NSSAI angezeigt werden, ist das Logikmodul der Nicht-Zugangsschicht so ausgebildet, dass es Informationen über die erste Netzwerkscheibe und die erlaubte NSSAI an das Logikmodul der Zugangsschicht sendet.

11. Endgerät nach Anspruch 10, wobei
nachdem das Logikmodul der Zugriffsschicht die von dem Logikmodul der Nicht-Zugriffsschicht gesendeten Informationen über die erste Netzwerkscheibe empfangen hat, das Logikmodul der Zugriffsschicht so ausgebildet ist, dass es bestimmt, die Zellenwiederauswahl vor dem Eintritt in den verbundenen Zustand durchzuführen, wenn mindestens eine der folgenden Bedingungen erfüllt ist:
die Informationen der ersten Netzwerkscheibe sind nicht in dem einen oder den mehreren Netzwerkscheiben, die durch die zulässige NSSAI angegeben sind, enthalten; oder
die Priorität einer Frequenz, die der ersten Netzwerkscheibe einer Campingzelle entspricht, ist niedriger.

12. Endgerät nach Anspruch 11,
wobei während der Durchführung der Zellenwiederauswahl das Endgerät so ausgebildet ist, dass es eine Zelle mit einer höchsten Priorität der Frequenz, die der ersten Netzwerkscheibe entspricht, unter den Zellen auswählt, die die erste Netzwerkscheibe unterstützen, um in den verbundenen Zustand einzutreten.

13. Chip, der Folgendes umfasst:
einen Prozessor, der so ausgebildet ist, dass er Computerprogramme aus einem Speicher aufruft und ausführt, um ein Endgerät, auf dem der Chip angebracht ist, zu veranlassen, das Verfahren nach einem der Ansprüche 1 bis 6 durchzuführen.

## Revendications

1. Procédé d'entrée dans un mode connecté, réalisé par un dispositif terminal, le procédé comprenant :
avant que le dispositif terminal n'entre dans le mode connecté, le fait de déterminer (5101), par le dispositif terminal sur la base d'informations d'une tranche de réseau qui doit être utilisée, s'il faut réaliser une resélection de cellule avant d'entrer dans le mode connecté,
**caractérisé en ce qu'**avant d'entrer dans le mode connecté le procédé comprend :
une durée entre un temps après qu'une couche d'accès du dispositif terminal reçoit un déclencheur en provenance d'une couche de strate de non-accès, NAS, et un temps avant que le dispositif terminal n'entre dans le mode connecté.

2. Procédé selon la revendication 1, dans lequel les informations de la tranche de réseau qui doit être utilisée comprennent au moins un élément parmi :
des informations d'une tranche de réseau qui doit être utilisée par un service actuel du dispositif terminal ; ou
des informations de tranche de réseau d'une session d'unité de données de protocole, PDU.

3. Procédé selon l'une quelconque des revendications 1 à 2, dans lequel le fait de déterminer, par le dispositif terminal sur la base des informations de la tranche de réseau qui doit être utilisée, s'il faut réaliser la resélection de cellule avant d'entrer dans le mode connecté comprend :
le fait de déterminer, par une couche d'accès du dispositif terminal sur la base des informations de la tranche de réseau qui doit être utilisée, s'il faut réaliser la resélection de cellule avant d'entrer dans le mode connecté.

4. Procédé selon la revendication 3, comprenant en outre : dans un cas où un service actuel du dispositif terminal doit utiliser une première tranche de réseau,
lorsque le dispositif terminal détermine que la première tranche de réseau n'est pas une tranche de réseau parmi une ou plusieurs tranches de réseau indiquées par des informations d'aide à la sélection de tranche de réseau, NSSAI, autorisées, l'envoi, par la couche NAS du dispositif terminal, d'informations de la première tranche de réseau à la couche d'accès du dispositif terminal ; ou
lorsque le dispositif terminal détermine que la première tranche de réseau n'est pas une tranche de réseau parmi une ou plusieurs tranches de réseau indiquées par des NSSAI autorisées, l'envoi, par la couche NAS du dispositif terminal, d'informations de la première tranche de réseau et des NSSAI autorisées à la couche d'accès du dispositif terminal.

5. Procédé selon la revendication 4, comprenant en outre :
après que la couche d'accès du dispositif terminal reçoit les informations de la première tranche de réseau envoyées par la couche NAS, le fait de déterminer, par la couche d'accès du dispositif terminal, de réaliser la resélection de cellule avant d'entrer dans le mode connecté, lorsqu'au moins l'un des éléments suivants est satisfait :
les informations de la première tranche de réseau ne sont pas dans les une ou plusieurs tranches de réseau indiquées par les NSSAI autorisées ; ou
une priorité d'une fréquence correspondant à la première tranche de réseau d'une cellule de mise en attente est plus basse.

6. Procédé selon la revendication 5, comprenant en outre :
pendant la réalisation de la resélection de cellule, la sélection, par le dispositif terminal, d'une cellule ayant une priorité la plus haute de la fréquence correspondant à la première tranche de réseau parmi des cellules prenant en charge la première tranche de réseau pour entrer dans le mode connecté.

7. Dispositif terminal comprenant :
un module de détermination (100), configuré pour déterminer, sur la base d'informations d'une tranche de réseau qui doit être utilisée, s'il faut réaliser une resélection de cellule avant d'entrer dans un mode connecté, avant que le dispositif terminal n'entre dans le mode connecté,
**caractérisé en ce qu'**avant d'entrer dans le mode connecté le procédé comprend :
une durée entre un temps après qu'une couche d'accès du dispositif terminal reçoit un déclencheur en provenance d'une couche de strate de non-accès, NAS, et un temps avant que le dispositif terminal n'entre dans le mode connecté.

8. Dispositif terminal selon la revendication 7, dans lequel les informations de la tranche de réseau qui doit être utilisée comprennent au moins un élément parmi :
des informations d'une tranche de réseau qui doit être utilisée par un service actuel du dispositif terminal ; ou
des informations de tranche de réseau d'une session d'unité de données de protocole, PDU.

9. Dispositif terminal selon l'une quelconque des revendications 7 à 8, dans lequel le module de détermination (100) comprend un module logique de couche d'accès, configuré pour déterminer, sur la base des informations de la tranche de réseau qui doit être utilisée, s'il faut réaliser la resélection de cellule avant d'entrer dans le mode connecté.

10. Dispositif terminal selon la revendication 9, dans lequel le module de détermination (100) comprend en outre un module logique de couche de non-accès, dans un cas où un service actuel du dispositif terminal doit utiliser une première tranche de réseau,
lorsque le dispositif terminal détermine que la première tranche de réseau n'est pas une tranche de réseau parmi une ou plusieurs tranches de réseau indiquées par des informations d'assistance de sélection de tranche de réseau, NSSAI, autorisées, le module logique de couche de non-accès du dispositif terminal est configuré pour envoyer des informations de la première tranche de réseau au module logique de couche d'accès ; ou
lorsque le dispositif terminal détermine que la première tranche de réseau n'est pas une tranche de réseau parmi une ou plusieurs tranches de réseau indiquées par des NSSAI autorisées, le module logique de couche de non-accès est configuré pour envoyer des informations de la première tranche de réseau et des NSSAI autorisées au module logique de couche d'accès.

11. Dispositif terminal selon la revendication 10, dans lequel
après que le module logique de couche d'accès reçoit les informations en provenance de la première tranche de réseau envoyées par le module logique de couche de non-accès, le module logique de couche d'accès est configuré pour déterminer de réaliser la resélection de cellule avant d'entrer dans le mode connecté, lorsqu'au moins l'un des éléments suivants est satisfait :
les informations de la première tranche de réseau ne sont pas dans les une ou plusieurs tranches de réseau indiquées par les NSSAI autorisées ; ou
une priorité d'une fréquence correspondant à la première tranche de réseau d'une cellule de mise en attente est plus basse.

12. Dispositif terminal selon la revendication 11, dans lequel pendant la réalisation de la resélection de cellule, le dispositif terminal est configuré pour sélectionner une cellule ayant une priorité la plus haute de la fréquence correspondant à la première tranche de réseau parmi des cellules prenant en charge la première tranche de réseau pour entrer dans le mode connecté.

13. Puce comprenant :
un processeur, configuré pour appeler et exécuter des programmes informatiques à partir d'une mémoire afin d'amener un dispositif terminal sur lequel la puce est montée à réaliser le procédé selon l'une quelconque des revendications 1 à 6.
